# EUROPEAN PATENT APPLICATION

(11) **EP 0 927 789 A1**
(43) Date of publication of application: **07.07.1999**
(21) Application number: 98124778.6
(22) Date of filing: 29.12.1998
(51) Int. Cl.: D21C 5/02

(54) **Fiber reclamation using carbon dioxide**

(30) Priority: 31.12.1997 US 1473
(71) Applicant: PRAXAIR TECHNOLOGY, INC., Danbury, CT 06810-5113 (US)
(72) Inventor: Medeiros, Douglas Barbosa, Iraja, Rio de Janeiro, RJ (BR); Maziviero, Paulo Roberto, Santa Terezinha, Sao Paulo, SP (BR)
(74) Representative: Schwan, Gerhard, Dipl.-Ing.

(57) **Abstract**

A process for separating a pulp fiber from a suspended matter in a liquid phase and recovering said fiber therefrom in a flotation stage, the process comprising introducing at least a portion of a carbon dioxide containing gas into an air stream directed to said flotation stage to form an air bubble thereby, said air bubble attaching to said fiber and rises to the surface of said liquid phase while said suspended matter settles in said liquid phase.

## Description

### FIELD OF THE INVENTION

This invention relates to a process for recycling and recovering pulp fiber in the papermaking process, and more particularly, to a process for fiber reclamation using carbon dioxide.

### BACKGROUND OF THE INVENTION

The impetus for using recycled fiber is based on the diminishing wood supply, decreasing landfill space, and increasing global demand for paper and the social concern over deforestation. A perspective of the contribution that the recycling process to recover/reuse fiber can make to conserve natural resources and energy can be illustrated when compared on a dry tonnage basis. For example, one hundred tons of waste paper yields about 68 tons of dry furnish. For the same 68 tons of dry furnish, about 69 cords (247 m³) of wood would have to be processed to produce the same yield. For this reason, it is important to improve the fiber reclamation process in the pulp and paper industry.

In the fiber reclamation process, flotation is a unit operation used to separate solid or liquid particles from a liquid phase. Separation is brought about by introducing fine gas (usually air) bubbles into the liquid phase. The gas bubbles attach to the particle and enables the particle to rise to the surface. Particles that have higher density than the liquid can also be facilitated (e.g., oil suspension in water).

Generally, the use of carbon dioxide with the compressed air in the flotation system increases the efficiency of the process and consequently reduces the fiber loss in the fiber reclamation process. The fiber returns to the paper manufacture process, reducing the pulp and wood consumption.

In the fiber flotation process, it is very important that the gas and liquid phases have a high affinity to each other to achieve good efficiency, and to avoid loss of fiber that go with the clarified water. In general, problems involving affinity, good efficiency and fiber loss occur when only compressed air is used as a carrier gas. Because carbon dioxide has a greater affinity for the liquid phase than the compressed air, carbon dioxide may be used instead of compressed air, or replacing part of the air by carbon dioxide, or to add an amount of carbon dioxide to a standard quantity of the air, to increase the fiber reclamation.

In analogous systems such as wastewater treatment, flotation is used principally to remove suspended matter and to concentrate biological sludges. The principal advantage of flotation over sedimentation is that very small or light particles that settle slowly can be removed more completely and in a shorter time period. Once the particles have floated to the surface, they can be collected by a skimming operation.

In air flotation systems, air bubbles are formed by introducing the gas phase directly into the liquid phase through a revolving impeller or through diffusers, aeration alone for a short period is not particularly effective in bringing about flotation of solids. Flotation involves injecting gas (air) into pulp slurry. This will cause the fiber to entrain in the gas as it floats to the top of the tank. The fiber is scraped off the surface. The clean water is removed from the middle of the tank.

The use of carbon dioxide in a flotation system has been discussed in L. Marchildon et al., "Evaluation of Carbon Dioxide as a Carrier Gas in Flotation System", Tappi Journal, Vol. 76, No. 3, 155-159, March 1993. This paper discusses using carbon dioxide to improve ink removal to provide a better quality pulp. There is believed to be no teaching or suggestion for the improvement in fiber reclamation.

There is, therefore, a need in the art to provide a process for recycling and recovering paper pulp that is environmentally safe and conserves precious natural resources.

### OBJECTS OF THE INVENTION

It is therefore an object of the invention to provide a process for recycling pulp fiber in paper making.

It is also an object of this invention to provide a process for removing undesired materials associated with paper making, and to recover recycled pulp fiber in high efficiency resulting in a minimum loss of fiber.

### SUMMARY OF THE INVENTION

This invention is directed to a process for separating a pulp fiber from a suspended matter in a liquid phase and recovering the fiber therefrom in a flotation stage. The process comprises introducing at least a portion of a carbon dioxide containing gas into an air stream directed to the flotation stage to form an air bubble thereby, the air bubble attaching to the fiber and rises to the surface of the liquid phase while the suspended matter settles in the liquid phase. Preferably, a diffuser is used to generate air bubble as carbon dioxide passes therethrough.

Generally, the suspended matter is a solid particle made up of a hydrophobic substance selected from the group consisting of ink particles, fibers and fillers, each of which may be suspended in a pulp slurry.

An air stream induces the formation of the air bubble in the flotation stage for the suspended matter to entrain therein. An ionic polymer is added to impart an electrical charge to the liquid phase. The polymer is an organic polymer active in the pH range of between about pH 5.0 to about pH 8.0.

Carbon dioxide may be mixed with the fiber-containing liquid phase prior to the flotation stage. The air stream is made up of from about 18.0 to about 25.0 liters of carbon dioxide containing gas per kilogram of fiber, preferably from about 21.5 liters of carbon dioxide containing gas per kilogram of fiber.

In a specific embodiment, this invention is directed to a recycled papermaking process in which a fiber is separated from a contaminant, the process comprising passing a carbon dioxide containing gas through a diffuser to the pulp fiber to form an air bubble, such that the air bubble attaches to the fiber. The suspended contaminant is a solid particle made up of a hydrophobic substance selected from the group consisting of ink particles, fiber and fillers, and the suspension may be in a pulp slurry. An organic polymer active in the pH range of between about pH 5.0 to about pH 8.0 is added to aid the flotation.

Yet another embodiment of this invention is to a process of removing pulp fiber from a suspended matter contained in a liquid phase, the process comprising introducing a gas containing at least a portion of carbon dioxide into the liquid phase, generating a gas bubble from the gas to attach to the pulp fiber, and removing the pulp fiber which rises to the surface of the liquid phase.

### BRIEF DESCRIPTION OF THE DRAWINGS

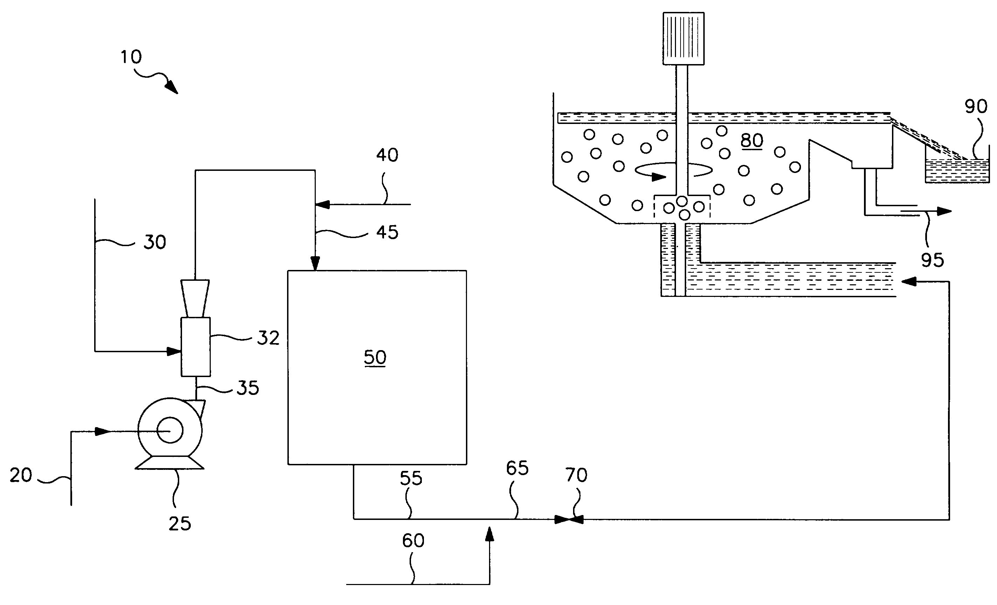

Other objects, features and advantages will occur to those skilled in the art from the following description of preferred embodiment and the accompanying drawing, in which Fig. 1 is a schematic representation of a process embodiment of this invention.

### DETAILED DESCRIPTION OF THE INVENTION

This invention is directed to separating a pulp fiber from a suspended matter in a liquid phase and recovering said fiber therefrom in a flotation stage.

The use of carbon dioxide as a carrier gas probably results in smaller bubbles because of the affinity between the gaseous and liquid phases. The layer surfactant deposited on the bubbles surfaces also is likely to be more unstable because of the mass transfer that occurs at the interface of the gaseous and liquid phase.

Ordinarily, flotation is performed under alkaline conditions between about pH 8 to about pH 10. However, the use of carbon dioxide as the carrier gas with the compressed air acidifies the process. Carbon dioxide is quite soluble in water, with the quantity of carbon dioxide that can dissolve in one liter of water ranging from 15 mg at 80°C to 75 mg at 30°C. This dissolution forms a mild acid pH 5.

The idea is to replace part of the compressed air used for flotation by carbon dioxide, or use together with the standard quantity of air an amount of carbon dioxide or in some cases to replace all the air by carbon dioxide.

The process of the present invention proceeds by introducing at least a portion of a carbon dioxide containing gas into an air stream directed to the flotation stage to form air bubbles. The air bubble attaches to the fiber and rises to the surface of the liquid phase, while the suspended matter settles in the liquid phase.

The suspended matter is generally a solid particle. These suspended matter may be a hydrophobic substance like ink particles, fibers and fillers. The suspended matter may be in the form of a pulp slurry.

The air stream induces the formation of the air bubble in the flotation stage for the suspended matter to entrain. An ionic polymer may be added to impart an electrical charge to the liquid phase. This polymer may be an organic polymer active in the pH range of between about pH 5.0 to about pH 8.0.

Carbon dioxide is added to the fiber containing liquid phase before the flotation stage. The air stream that is directed to the flotation stage is made up of about 18.0 to about 25.0 liters of carbon dioxide per kilogram of fiber. A diffuser is used to generate air bubbles as carbon dioxide containing gas is passed into the liquid phase.

As it can be seen in the following drawing the best place to inject carbon dioxide in the pump discharge before the reactor. In this line we have the best conditions to inject the gas including the high pressure and time to the carbon dioxide dissolution in the liquid phase.

Fig. 1 provides a schematic of an embodiment of the fiber reclamation system 10 of the present invention. Effluent 20 to be treated in this process is urged towards reactor 50 by pump means 25. Carbon dioxide 30 is injected through diffuser 32 into pump discharge 35. Carbon dioxide is injected at a pressure of about 8.0 to about 9.0 kg/cm². Compressed air 40 is injected into the carbon dioxide containing effluent forming gas containing stream 45. The compressed air is injected at about 7.0 kg/cm². Carbon dioxide-air-containing effluent stream 45 is passed to reactor 50 and emerges as reacted effluent stream 55. Polymers 60 commonly used to aid flotation processes is added to reacted effluent stream 55 forming polymer treated reacted effluent stream 65. Pressure control valve 70 regulates passage of stream 65 into the flotation system 80. The pressure control valve regulates effluent flow at about 6.0 kg/cm². Separation of fiber 90 and clean water 95 is effected at the outlet of flotation system 80.

The table below shows a summary of an industrial scale test with and without carbon dioxide.

| | WITHOUT CO₂ | WITH CO₂ |
|---|---|---|
| Effluent Flow (m³/h) | 325 | 345 |
| Air Flow (1/min) | 2,000 | 2,000 |
| CO₂ Flow (1/min) | ---#--- | 150 |
| Air Pressure (Kgf/cm²) | 6 | 6 |
| CO₂ Pressure (Kgf/cm²) | ---#--- | 9 |
| pH | 7.0/7.5 | 6.0/6.5 |
| Efficiency (%) | 61 | 85 |

In mills that have only the primary treatment system to remove the fibers from the final effluent, carbon dioxide is injected in the outlet pipe of the pump that sends the effluent to be treated to the reactor where the compressed air is added to the system. Preferably, the compressed air pressure ranges from about 4 to about 7 kg/cm², more preferably from about 5 to about 6 kg/cm². The carbon dioxide pressure injection depends on the pressure of the system (normally from about 4.0 to about 6.0 Kg/cm²). Preferably, the carbon dioxide pressure ranges from about 5 to about 10 kg/cm², more preferably from about 7 to about 9 kg/cm². The effluent passes through the reactor and immediately before the pressure control valve a polymer is added to the effluent. After the valve, the pressure is reduced and in the flotation system the fibers float keeping themselves together. The polymers are commonly used to aid flotation process. These chemicals, for the most part, function to create a surface or a structure that can easily absorb or entrap air bubbles. Inorganic chemicals, such as the aluminum and ferric salts and activated silica can be used to bind particulate matter together and, in so doing, create a structure that can easily entrap air bubbles. Various organic polymers can be used to change the nature of either the air-liquid interface of the solid-liquid interface or both. The organic polymers may include polymers containing acrylamide and acrylate groups. Preferably, these polymers are a combination of these two chemical groups. These compounds usually collect on the interface to bring the desired changes. In the case of the pulp mills polymers are more used than inorganic compounds.

As mentioned before, the use of carbon dioxide reduces a little of the pH of the effluent in the flotation system. For this reason, it is very important the suitable range of pH that the polymer used works. Polymers that do not work under slightly acid/basic conditions such as from about pH 5.0 to about pH 8.0 are generally not suitable in the process. In other words, carbon dioxide cannot be used in these cases unless the polymer is changed.

In a process where there is no reactor before the flotation, the carbon dioxide must be injected in the outlet pipe of the pump that sends the effluent to be treated to the flotation system. Pressure is very important to the carbon dioxide injection if the pressure is reduced the efficiency of the process will decrease.

Specific features of the invention are shown in one or more of the drawings for convenience only, as each feature may be combined with other features in accordance with the invention. Alternative embodiments will be recognized by those skilled in the art and are intended to be included within the scope of the claims.

## Claims

1. A process for separating a pulp fiber from a suspended matter in a liquid phase and recovering said fiber therefrom in a flotation stage, the process comprising introducing at least a portion of a carbon dioxide containing gas into an air stream directed to said flotation stage to form an air bubble thereby, said air bubble attaching to said fiber and rises to the surface of said liquid phase while said suspended matter settles in said liquid phase.

2. The process of claim 1 wherein said suspended matter is a solid particle.

3. The process of claim 2 wherein said suspended matter comprises a hydrophobic substance selected from the group consisting of ink particles, fibers and fillers.

4. The process of claim 1 wherein said air stream induces the formation of said air bubble in said flotation stage for said suspended matter to entrain therein.

5. The process of claim 1 wherein said air bubble is generated by passing said carbon dioxide containing gas in said liquid phase through a diffuser.

6. In a recycled papermaking process, a process for separating a fiber from a contaminant, the process comprising introducing a carbon dioxide containing gas to said pulp fiber to form an air bubble, such that said air bubble attaches to said fiber.

7. The process of claim 6 wherein said air bubble is generated by passing said carbon dioxide containing gas through a diffuser.

8. The process of claim 7 wherein said suspended contaminant comprises a hydrophobic substance selected from the group consisting of ink particles, fiber and fillers.

9. A process of removing pulp fiber from a suspended matter contained in a liquid phase, the process comprising introducing a gas containing at least a portion of carbon dioxide into said liquid phase, generating a gas bubble from said gas to attach to said pulp fiber, and removing the pulp fiber which rises to the surface of said liquid phase.

10. The process of claim 9 wherein said air bubble is formed by introducing said gas into the liquid phase through a diffuser.
